# EUROPEAN PATENT SPECIFICATION

(11) **EP 4 423 177 B1**
(45) Date of publication and mention of the grant of the patent: **01.10.2025**
(21) Application number: 22813141.3
(22) Date of filing: 28.10.2022
(51) Int. Cl.: C08J 7/04, C08J 7/043

(54) **PVC-BASED MULTILAYER SURFACE COVERING WITH PVOH BARRIER**
MEHRSCHICHTIGE OBERFLÄCHENBESCHICHTUNG AUF PVC-BASIS MIT PVOH-BARRIERE
REVÊTEMENT DE SURFACE MULTICOUCHE À BASE DE PVC DOTÉ D'UNE BARRIÈRE DE PVOH

(30) Priority: 29.10.2021 LU 102867
(43) Date of publication of application: 04.09.2024
(73) Proprietor: Tarkett GDL, 9779 Lentzweiler (LU)
(72) Inventor: SICHE, Alexandre, 9559 Wiltz (LU)
(74) Representative: Aronova
(86) International application number: PCT/EP2022/080176
(87) International publication number: WO 2023/073160

(56) References cited:
- WO-A1-2010/142325

## Description

### Introduction

The present invention relates to a PVC-based multilayer surface covering, e.g., flooring or wallcovering, comprising a polyvinyl alcohol-based barrier layer.

### Background of the Invention

For decoration of interior or exterior surfaces, such as, e.g., of a building, of a home or a of vehicle, decorative polyvinyl chloride (PVC) based surface coverings are well known and widely used.

However, PVC-based coverings have the drawback of being permeable to certain substances. In order to prevent or limit this phenomenon, while also preventing or limiting the penetration into the covering of dirt of whatever kind, it was proposed to cover the outer or exposed surface of the surface covering with a polyurethane-type protective covering. However, this solution does not solve the problem of contaminants, present on the surface to be covered by the surface covering, from entering the surface covering and migrating through the various layers thereof, leading to deterioration of mechanical performance characteristics and of the aesthetic appearance. Typical contaminants may originate from a bituminous underground, or from any adhesive used to bond the surface covering to the support surface.

In addition, in case of a PVC-based surface covering, in particular, of a multilayer product, the manufacture of one or more layers of the covering may involve the use of recycled PVC (e.g., sourced from old decorative surface coverings). Compounds used in these recycled coverings can then be found in the new covering and have an impact on its properties. For instance, pigments contained in the recycled PVC can lead to so-called yellowing and thereby deteriorate the aesthetic appearance of the new surface covering.

In order to reduce or eliminate the yellowing phenomenon and to maintain the mechanical performance characteristics of a PVC-based covering, the use of a barrier layer was proposed.

In flooring or wallcoverings, such barrier layer is typically a polyester-based or polyamide film or coating.

Classically, the lining with a barrier film or the coating of a barrier composition is performed on at least one face of the surface covering, generally between the support or core layer and the wear layer, or between the support or core layer and the décor layer (e.g., a printed layer).

Whereas application of a barrier by coating does not pose specific problems, introduction of a step for the lamination of a barrier film is not practically feasible in continuous surface covering production, which uses 4 or 5 m wide webs, since barrier films are generally available only with smaller widths.

Furthermore, the incorporation of a polyester-based or polyamide barrier layer would render the recycling of the PVC-based coverings very difficult or even impossible because it would require special treatment that is not compatible or hardly compatible with the majority of the recycling processes for PVC surface coverings.

Polyvinyl alcohol (PVOH), well known for its barrier properties in packaging films was not used for a PVC layer owing to its low adherence to PVC, and particularly for a PVC layer including a significant amount of mineral fillers, until WO 2010/142325 A1 proposed a solution to improve the attachment of the PVOH layer on a PVC layer. The PVOH barrier layer was provided with a silane compound comprising at least one amine function in order to render the PVOH compatible with the PVC-based substrate.

It turned out that the silane-modified PVOH barrier layer affects the barrier layer's resistance to water and humidity. PVOH forms a crystalline layer on the substrate and the quality of this layer has an impact on the water and humidity resistance. Simply put, lower crystallinity leads to more rapid swelling of the PVOH layer. Swelling may cause stress in the PVOH layer and lead to (local or more widespread) delamination thereof from the substrate. Without wanting to be bound by theory, the inventors believe that the silane compound comprising at least one amine function negatively affects the crystallinity of the PVOH layer, so that lower water and humidity resistance is the result.

### Summary of the Invention

The present invention proposes a solution that does not present certain drawbacks of the prior art. More specifically, a barrier layer is proposed that is an alternative to the barrier layers of the prior art and that is compatible with established surface covering recycling processes.

It also seeks to provide a surface covering for which the mechanical performance characteristics and the aesthetic appearance are less altered over time.

According to a first aspect of the invention, a (decorative) surface covering, for use in finishing work in constructions or vehicle interiors, is proposed. The surface covering according to this aspect comprises:
o a PVC-based layer, the PVC-based layer, optionally, but preferably, comprising inorganic or organic filler (such as, e.g., calcium carbonate, magnesium carbonate, ground limestone or chalk, gypsum, wood fibers, saw dust, etc.),
o a barrier layer directly adjacent the PVC-based layer, the barrier layer comprising polyvinyl alcohol and a polyisocyanate derivative obtained through reaction of a polyisocyanate with hydroxyl groups of the polyvinyl alcohol, the polyisocyanate derivative bonding the barrier layer to the PVC-based layer.

The expression "polyisocyanate derivative" used herein designates a moiety obtained through reaction of a polyisocyanate with hydroxyl groups of the polyvinyl alcohol and, preferably, components of the PVC layer. The PVC layer may be a PVC layer functionalized with hydroxyl groups capable of reacting with the polyisocyanate. The term "polyisocyanate", as used herein, is intended to include polyfunctional isocyanate, i.e., a moiety having at least two isocyanate functional groups. For example, diisocyanate is an example of a polyisocyanate having an isocyanate functionality of 2. As used herein, the term "isocyanate functionality" designates the (average) number of isocyanate functional groups per molecule. According to preferred embodiments of the invention, the polyisocyanate has an (average) isocyanate functionality in the range from 2 to 6, more preferably in the range from 2.5 to 6 and still more preferably in the range from 3 to 5. The polyisocyanate could comprise a mixture of several polyfunctional isocyanates, e.g., diisocyanate, triisocyanate.

According to preferred embodiments, the polyisocyanate derivative in the decorative surface covering takes the form of a polyurethane moiety. The polyisocyanate derivative, e.g., the polyurethane moiety, most preferably comprises at least one of (a) one or more carbonyl groups, (b) one or more carboxyl groups and (c) one or more hydroxyl groups. These groups may be helpful for bonding the barrier layer to the PVC-based layer. Additionally, or alternatively, the polyisocyanate derivative could comprise polyurethane containing unsaturation (carbon-carbon double bonds) in its backbone. Unsaturation may be introduced during the production of the polyurethane incorporating a chain extender (e.g., a glycol) that contain carbon-carbon double bonds. Additionally, or alternatively, the polyurethane may comprise or consist of aliphatic polyurethane.

The PVC-based layer may contain between 0 wt.% and 500 wt.% (weight percent) of filler with respect to the PVC resin. An example of a filler-free PVC-based layer may be the transparent or translucent wear layer of a multilayer surface covering. Apart from that, the invention may be particularly interesting if the PVC-based layer comprises moderately high amounts of filler, e.g., from 50% to 300% by weight, more preferably from 50% to 200% by weight, with respect to the weight of the PVC resin. The PVC-based layer could be, for example, the structural core layer of a multilayer surface covering. Preferably, the filler comprises or consists of inorganic filler.

The qualifier "decorative", as used herein, is intended to imply that the item thereby qualified, such as the surface covering, remains visible in normal use (as an item of finishing work). The use of the term, should not, however, be taken to imply any particular aesthetic appearance.

Preferably, the polyisocyanate derivative also acts as a polyvinyl alcohol crosslinker. Preferably, the crosslinking of the polyvinyl alcohol by the polyisocyanate derivative is incomplete in the sense that only part of the hydroxyl groups of the polyvinyl alcohol have reacted with the polyisocyanate. Preferably, the polyvinyl alcohol is only sparsely crosslinked, so as to maintain high crystallinity.

The polyvinyl alcohol may be fully hydrolysed, i.e., have a degree of hydrolysis of not less than 98 mol%. The degree of hydrolysis is defined as the number of OH groups divided by the sum of the numbers of OH groups and residual acetate groups. Preferably, the degree of hydrolysis of the polyvinyl alcohol is not less than 99 mol%, e.g., 99.5 mol% or more.

The polyisocyanate derivative may have the general formula:

[-O-(C=O)-NH-]ₙ-R-[-NH-(C=O)-O-]ₘ

where n and m are integers ≥1, R represents an aliphatic or aromatic moiety with 4 to 20 carbon atoms, or where R is an (organic) moiety including one or more internal urethane groups -NH-(C=O)-O-. Optionally, R may comprise at least one of (a) one or more carbonyl groups, (b) one or more carboxyl groups and (c) one or more hydroxyl groups.

The polyisocyanate derivative could, for instance, be or comprise a derivative of at least one of: toluene diisocyanate, methylene diphenyl diisocyanate, hexamethylene diisocyanate, isophorone diisocyanate, naphthalene diisocyanate, p-phenylene diisocyanate and methylene dicyclohexyl diisocyanate.

Preferably, the surface covering comprises at least one of a floor covering (flooring) and a wall covering (wallcovering).

The PVC-based layer may comprise recycled PVC. Preferably, the recycled PVC content amounts to at least 20%, more preferably to at least 25%, still more preferably to at least 30%, by weight, of the overall PVC content.

A further aspect of the invention relates to a method for producing a surface covering, for use in finishing work in constructions or vehicle interiors. The method comprises:
o providing a PVC-based layer, with or without inorganic or organic filler,
o forming a barrier layer directly adjacent the PVC-based layer by applying an aqueous coating composition on the PVC-based layer, the aqueous coating composition comprising polyvinyl alcohol the barrier layer comprising polyvinyl alcohol and a polyisocyanate, heating the aqueous coating composition to a temperature in the range from 170 to 210°C so as to make the polyisocyanate react with the polyvinyl alcohol and the PVC-based layer so as to form a polyvinyl-alcohol-based barrier layer bonded by a polyisocyanate derivative to the PVC-based layer.

Preferably, the polyisocyanate is a blocked polyisocyanate having an activation temperature in the range from 120°C to 150°C. As used herein, the activation temperature corresponds to the temperature at which the blocking agent dissociates from the isocyanate, enabling it to react with other moieties.

The heating of the aqueous coating composition may be to a temperature in the range from 180 to 210°C.

The polyisocyanate derivative (dry) content preferably amounts between 20% and 50% of the weight of the polyvinyl alcohol, more preferably to between 30% and 40% of the weight of the polyvinyl alcohol, e.g., to 35% by weight of the polyvinyl alcohol.

The surface covering may comprise a structural support layer (or core layer) and a wear layer. Each of the support layer and the wear layer may be a PVC-based layer as set forth above. Preferably, the support layer is the PVC-based layer, whereas that wear layer is free or substantially free of inorganic filler. The barrier layer may be located between the support layer and the wear layer and/or on the underside of the support layer.

The PVC-based layer may be is foamed. Alternatively, the PVC-based layer, may be compact, i.e., unfoamed. The PVC-based layer is preferably phthalate-free.

In the method, application of the coating may be done by any suitable technique, e.g., spreading using one or more blades, printing, etc. Application of the coating is preferably done over the full width of the PVC-based layer, which preferably amounts to more than 2 m, preferably to 4 to 5 meters.

Preferably, the coating is applied to form a barrier layer having a thickness in the range from 2 µm to 10 µm, when dry. More preferably, the coating is applied to form a barrier layer having a thickness in the range from 3 µm to 7 µm, when dry. The aqueous coating composition may, for instance, be applied with a surface density between 20 and 100 g/m², preferably with a surface density between 30 and 80 g/m².

Application of the coating may be done on one or both sides of the PVC-based layer. In certain embodiments, where the PVC-based layer is the support layer, applying the coating and thus realising a barrier layer on both sides, may be preferred.

Preferably, the aqueous coating composition is prepared by providing a mixture comprising between 70% and 95% by weight of water and between 5% and 30% by weight of polyvinyl alcohol, heating the mixture to between 90 and 95°C and maintaining the temperature, preferably while stirring, until the polyvinyl alcohol is dissolved (e.g., 1 hour). The mixture may then be let cool down (e.g., to 35°C, to room temperature or to a temperature between 20 and 35°C). The polyisocyanate may then be added in an amount between 6% and 40% by weight of the polyvinyl alcohol (dry content). Optionally, a wetting agent may be added, e.g., in an amount between 0.4 and 2% by weight with respect to the weight of the mixture of water and polyvinyl alcohol.

### Brief Description of the Drawings

By way of example, preferred, embodiments of the invention will now be described in detail with reference to the accompanying drawings, in which:
Fig. 1: is an illustration of a basic multilayer surface covering in accordance with an embodiment;
Fig. 2: is an illustration of a multilayer surface covering comprising a PVC-based core layer, a barrier layer, and a protective wear layer;
Fig. 3: is an illustration of a multilayer surface covering comprising a PVC-based core layer, a barrier layer on each side of the core layer and a protective wear layer;
Fig. 4: is an illustration of a multilayer surface covering comprising a PVC-based core layer, a barrier layer on the bottom side of the core layer, a décor layer, and a protective wear layer;
Fig. 5: is an illustration of a multilayer surface covering comprising a PVC-based core layer, a barrier layer on the top side of the core layer, a décor layer, and a protective wear layer;
Fig. 6: is an illustration of a multilayer surface covering comprising a PVC-based core layer, a barrier layer on each side of the core layer, a décor layer, and a protective wear layer.
It should be noted that the drawings purely schematic and do not necessarily show, in particular, the thicknesses of the different layers in the right proportions.

### Detailed Description of Preferred Embodiments

The present invention uses a composition, comprising polyvinyl alcohol (PVOH) and a polyisocyanate derivate, as a barrier layer for a PVC-based decorative surface covering, which is either non-foamed or foamed. The surface covering is preferably used as a floor covering, as a wall covering or to provide the visible surface of a vehicle interior (e.g., car interior lining). Optionally, but preferably, the surface covering is an acoustic surface covering having acoustic properties, such as, e.g., anisotropic sound attenuation properties.

The application of polyvinyl alcohol on a PVC layer, in particular when the latter contains fillers, first requires that it be rendered "compatible" with the PVC, i.e., that its bonding to the PVC layer is increased.

It has been found that a composition comprising polyvinyl alcohol and polyisocyanate leads to formation of a polyvinyl alcohol film offers good adhesion on a PVC film or layer, particularly on a PVC layer comprising inorganic fillers, while presenting a barrier effect against plasticizers and other volatile organic contaminants.

The composition, used for the barrier layer of the surface covering according to the invention, may preferably be an aqueous polyvinyl alcohol solution comprising a polyisocyanate, more preferably a blocked polyisocyanate, and optionally, a wetting agent.

The composition may be prepared by providing a mixture comprising between 70% and 95% water by weight and between 5% and 30% polyvinyl alcohol by weight. The water-PVOH mixture may be first heated, for example, to between 90°C. and 95°C until the polyvinyl alcohol is dissolved. The mixture may then be actively or passively cooled down to between 20 and 35°C. Then, polyisocyanate may be added. The polyisocyanate may represent between 6% and 40% by weight of the polyvinyl alcohol (dry content). Optionally, but preferably, wetting agent may be added in an amount between 0.4 and 2% by weight with respect to the weight of the mixture of water and polyvinyl alcohol. The polyvinyl alcohol preferably has a degree of hydrolysis of not less than 98 mol%, more preferably of not less than 99 mol%. The barrier layer may be formed by applying the aqueous coating containing the polyvinyl alcohol and the (blocked) polyisocyanate onto the PVC-based layer and heating the coating to a temperature sufficient to make the polyisocyanate react with the the polyvinyl alcohol but low enough not to entail deterioration of the PVC-based layer (and the other components). When the polyisocyanate is a blocked polyisocyanate, the temperature needs to be higher than the unblocking temperature (activation temperature). The coating is thus preferably heated to a temperature higher than the activation temperature but not higher than about 210°C.

The polyisocyanate derivative (obtained through the reaction between the polyisocyanate, polyvinyl alcohol and the PVC layer) preferably has the general formula:

[-O-(C=O)-NH-]ₙ-R-[-NH-(C=O)-O-]ₘ

where n and m are integers ≥1, R represents an aliphatic or aromatic moiety with 4 to 20 carbon atoms, or where R is an (organic) moiety including one or more internal urethane groups -NH-(C=O)-O-. R may comprise at least one of (a) one or more carbonyl groups, (b) one or more carboxyl groups and (c) one or more hydroxyl groups.

The (blocked) polyisocyanate could, for instance, comprise at least one of: (blocked) toluene diisocyanate, (blocked) methylene diphenyl diisocyanate, (blocked) hexamethylene diisocyanate, (blocked) isophorone diisocyanate, (blocked) naphthalene diisocyanate, (blocked) p-phenylene diisocyanate and (blocked) methylene dicyclohexyl diisocyanate.

Examples of aqueous coating compositions usable to form barrier layers on PVC-based layers in accordance with embodiments of the invention given in table 1. The proportion of the components is given in weight percentages with respect to the polyvinyl alcohol (PVOH).

| **Table 1** | 1 | 2 | 3 | 4 | 5 | 6 | 7 | 8 |
|---|---|---|---|---|---|---|---|---|
| Water | 810 | 810 | 810 | 810 | 810 | 1150 | 1150 | 1150 |
| PVOH | 100 | 100 | 100 | 100 | 100 | 100 | 100 | 100 |
| Polyisocyanate | 6 | 12.5 | 20 | 30 | 40 | 7 | 25 | 35 |
| Wetting agent | 9 | 9 | 9 | 9 | 9 | 10 | 10 | 10 |

The polyvinyl alcohol may be Elvanol^{™} 90-50, Elvanol^{™} 71-30, Elvanol^{™} 70-75 from Dupont, or Exceval^{™} HR 3010, Exceval^{™} AQ 4104 from Kuraray.

The wetting agent may be polydimethylsiloxane polyether, for example BYK^{™}-307 from BYK, or Tego^{™} Wet 500 from Evonik.

The polyisocyanate may be, e.g., Arkophob^{™} DAN from Archroma, a blocked polyfunctional isocyanate with an activation temperature in the range from 120-130°C.

The barrier layer coating composition has the advantage of being easily applied on a PVC layer or film, for example by printing, rotogravure or a roller type covering device. It is thus possible to integrate the barrier layer installation step in a continuous surface covering production line with 2m, 4m or even greater web width.

The above coating compositions were tested on several PCV layers, having different contents of inorganic filler. The coating compositions were applied in the form of a single-coat on different PVC-based layers, and dried/cured, for example for 2.5 minutes at 195°C, so as to form a barrier layer with a thickness of approximately 4 or 5 µm. Alternative coating compositions may comprise a polyurethane, e.g., an aliphatic polyurethane (e.g., NeoRez^{™} R-4000 from Covestro), instead of or in addition to the polyisocyanate. Such polyurethane preferably comprises one or more carbonyl groups, and/or one or more carboxyl groups and/or one or more hydroxyl groups.

The adhesion of the barrier layer on the PVC layer was evaluated by scratching the product with a six-tooth comb, then assessing the peel resistance using TESA^{™} 4124 adhesive tape. The adhesion was considered "good" when no trace of barrier layer was torn away from the PVC layer. All specimens based on compositions 1-10 tested exhibited "good" adherence on different the PVC-based layers detailed hereinafter.

The first PVC layer used in the adhesion tests comprised 31% PVC by weight, 55% inorganic fillers and 14% plasticizer by weight. Embodiments of the invention may use different types of plasticizer, e.g., phthalate plasticizers, non-phthalate plasticizers ("non-phthalate" meaning not containing any orthophthalate) or citrate plasticizers. Examples of plasticizers may be DINP (diisononyl phthalate), DINCH (diisononyl cyclohexanoate), DOA (dioctyl adipate), etc.

The second PVC layer used in the adhesion tests was a foamed layer, comprising 100 parts (all parts refer to parts by weight) of Pevikon^{™} PVC P682, 117 parts of calcium carbonate (Omya BL 20) used as an inorganic filler, 2.9 parts of a blowing agent, an azodicarbonamide (Porofor ADCL-C2), 1.38 parts of ZnO used to lower the decomposition temperature of the blowing agent, 0.7 parts of Titanium RC 82, 30.3 parts of DIHP (Jayflex^{™} 77), 26.2 parts of DIBP (Palatinol^{™} IC), and 14.5 parts of a dearomatized hydrocarbon used as a viscosity reducer (Exxsol D100).

The third PVC layer used in the adhesion tests was a non-foamed support layer, comprising 100 parts of Lacovyl^{™} PVC PB 1702 H, 156 parts of inorganic filler (Omya BL20), 45 parts of DIHP (Jayflex^{™} 77), 28 parts of DIBP (Palatinol^{™} IC) and 5 parts of viscosity reducer (Exxsol^{™} D100).

The fourth PVC layer used in the adhesion tests was a PVC film comprising 100 parts of Evipol^{™} PVC 6030, 100 parts of calcium carbonate (Imerys^{™} Micronic P5) used as an inorganic filler, 33 parts of DINP plasticizer from Exxon and 6 parts of stabilizer (REAPAK NT/7124 from Reagens).

The coating composition can be applied as a single coat, or as several successive layers. The thickness of the barrier layer thereby obtained is preferably between 0.5 µm and 10 µm, advantageously between 4 µm and 8 µm.

The barrier layer has the advantage of allowing the PVC covering, which comprises such a barrier layer, to be compatible with conventional methods of recycling PVC coverings, and thus enables such coverings to be recycled.

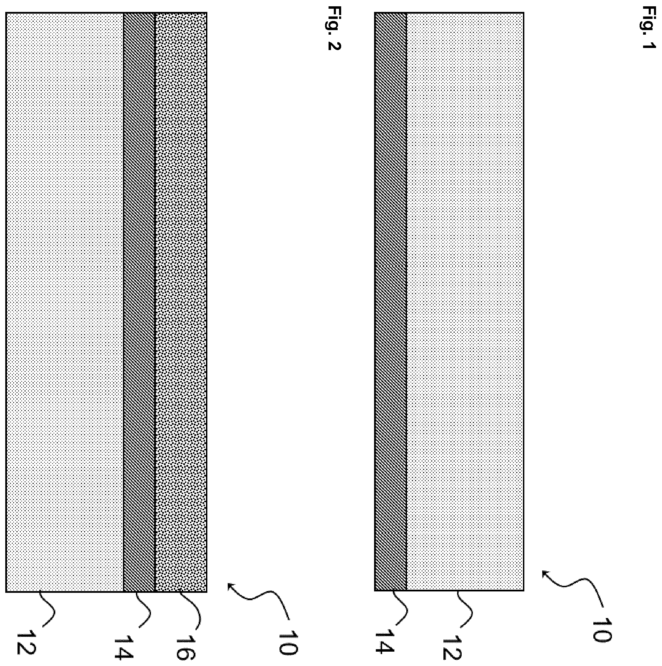

Figs 1 to 6 show different examples of multilayer decorative surface coverings 10 according to the invention.

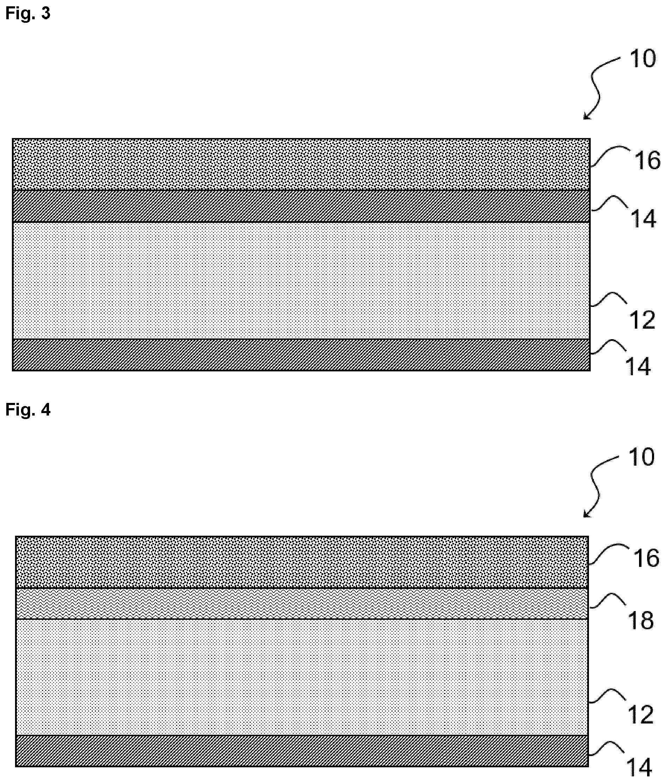

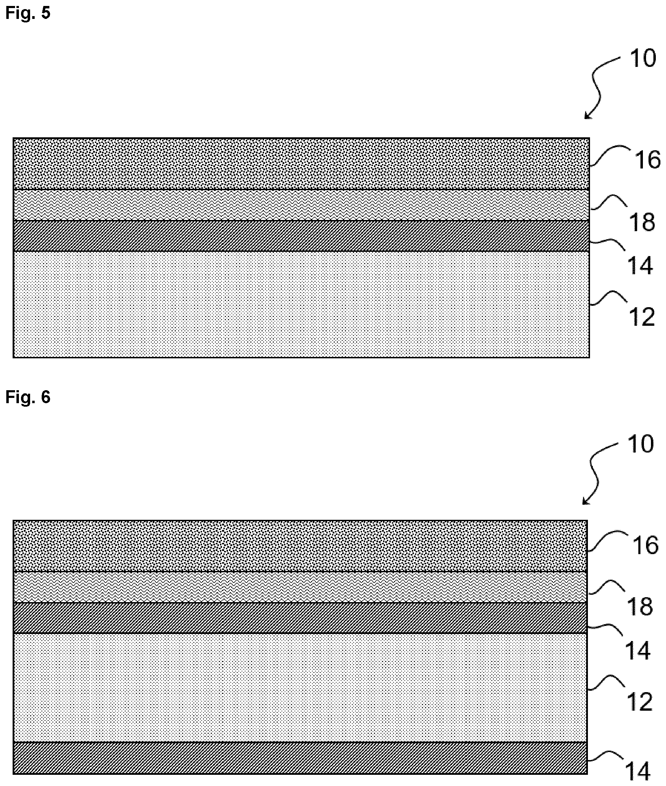

The aqueous coating composition may be prepared and applied to the PVC-based layer 12, so as to form a barrier layer 14 thereon. Fig. 1 illustrates a first embodiment, wherein the multilayer decorative surface covering 10 may comprise a PCV-based structural core layer as the PVC-based layer 12 and a barrier layer on one side of the PVC-based layer 12. The side with the barrier layer may be the top or the bottom side of the PVC layer. A barrier layer 14 may also be applied on both sides of the PVC-based layer, as illustrated in the embodiments of Figs. 3 and 6.

As shown in the embodiments of Figs. 2 and 3, the multilayer surface covering 10 may comprise a wear layer 16, preferably a transparent PVC-based wear layer, separated from the core layer by a barrier layer 14. The wear layer 16 may protect the underlying layers of the surface covering. According to the embodiment of Fig. 2, a barrier layer 14 may be present only on the top side of the core layer, so as to prevent contaminants to migrate into the wear layer and, eventually into ambient air. According to the embodiment of Fig. 3, a barrier layer 14 may be present on either side of the core layer.

Fig. 4 shows an embodiment, wherein the barrier layer 14 may be arranged on the bottom side of the core layer. On the top side of the core layer, the multilayer decorative surface covering may comprise a décor layer 18 (e.g., a decorative print printed either directly on the core layer or arranged on a printing substrate placed on the core layer) and a wear layer 16.

Fig. 5 shows an embodiment of a multilayer decorative surface covering 10, wherein a barrier layer 14 may be arranged directly on the top side of the core layer. The core layer and the barrier layer may carry a décor layer 18 (e.g., a decorative print printed either directly on the barrier layer or arranged on a printing substrate placed on the barrier layer) and a wear layer 16.

The embodiment of Fig. 6 corresponds to the embodiment of Fig. 5, except that the multilayer decorative surface covering 10 may comprise a second barrier layer arranged on the underside of the core layer.

The core layer may be a foamed or unfoamed PVC layer. In the case of a foamed core layer, the PVC composition from which it is made may comprise one or more blowing agents, such as a sulfonyl hydrazone, for example p,p'-oxybis benzene sulfonyl hydrazide, or an azodicarbonamide, for example Unifoam AZ ULTRA 7043 or Ultra 1050.

The barrier layer 14 adheres well on the PVC layer(s), on which it is applied or between which it is sandwiched, and presents a barrier effect by preventing or at least reducing the migration of plasticizers and/or contaminants through the surface covering, and more particularly toward any décor layer 18 (Figs. 5 and 6).

Table 2 shows an alternative example of an aqueous coating composition usable to form barrier layers on PVC-based layers in accordance with embodiments of the invention. The proportion of the components is given in weight percentages with respect to the polyvinyl alcohol (PVOH).

| **Table 2** | Amount (in parts by weight) |
|---|---|
| Water | 810 |
| PVOH | 100 |
| Polyisocyanate derivative | 6 |
| Wetting agent | 9 |

The polyvinyl alcohol may be Elvanol^{™} 90-50, Elvanol^{™} 71-30, Elvanol^{™} 70-75 from Dupont, Exceval^{™} HR 3010, Exceval^{™} AQ 4104, or Exceval RS 2117 from Kuraray. The polyisocyanate derivative in this example may be a polyurethane, such as, e.g., an aliphatic polyurethane, e.g., NeoRez^{™} R-4000 from Covestro. The wetting agent may be polydimethylsiloxane polyether, for example BYK^{™}-307 from BYK, or Tego^{™} Wet 500 from Evonik.

## Claims

1. A surface covering, for use in finishing work in constructions or vehicle interiors, comprising:
∘ a PVC-based layer,
∘ a barrier layer directly adjacent the PVC-based layer, the barrier layer comprising polyvinyl alcohol and a polyisocyanate derivative obtained through reaction of a polyisocyanate with hydroxyl groups of the polyvinyl alcohol, the polyisocyanate derivative bonding the barrier layer to the PVC-based layer.

2. The surface covering as claimed in claim 1, wherein the polyisocyanate derivative is a crosslinker of polyvinyl alcohol.

3. The surface covering as claimed in claim 1 or 2, wherein the PVC based layer comprises inorganic filler.

4. The surface covering as claimed in any one of claims 1 to 3, wherein the polyvinyl alcohol is fully hydrolysed, i.e., has a degree of hydrolysis of not less than 98 mol%.

5. The surface covering as claimed in any one of claims 1 to 4, wherein the polyisocyanate derivative has the general formula
[-O-(C=O)-NH-]ₘ-R-NH-[-(C=O)-O-]ₙ
where n and m are integers ≥1 and where R represents an aliphatic or aromatic moiety with 4 to 20 carbon atoms.

6. The surface covering as claimed in any one of claims 1 to 4, wherein the polyisocyanate derivative has the general formula
[-O-(C=O)-NH-]ₘ-R-NH-[-(C=O)-O-]ₙ
where n and m are integers ≥1 and where R includes one or more urethane groups -NH-(C=O)-O-.

7. The surface covering as claimed in any one of claims 1 to 6, wherein the polyisocyanate derivative comprises a derivative of at least one of: toluene diisocyanate, methylene diphenyl diisocyanate, hexamethylene diisocyanate, isophorone diisocyanate, naphthalene diisocyanate, p-phenylene diisocyanate and methylene dicyclohexyl diisocyanate.

8. The surface covering as claimed in any one of claims 1 to 7, wherein the surface covering comprises at least one of a floor covering and a wall covering.

9. The surface covering as claimed in any one of claims 1 to 8, wherein the PVC-based layer comprises recycled PVC, the recycled PVC content preferably amounting to at least 20%, more preferably to at least 25%, still more preferably to at least 30%, by weight, of overall PVC content.

10. The surface covering as claimed in any one of claims 1 to 9, wherein the PVC-based layer comprises a functionalisation with hydroxyl groups.

11. The surface covering as claimed in any one of claims 1 to 10, wherein the polyisocyanate derivative is obtained through reaction of a polyisocyanate having an isocyanate functionality in the range from 2.5 to 6, more preferably in the range from 3 to 5, with hydroxyl groups of the polyvinyl alcohol.

12. A method for producing a surface covering, for use in finishing work in constructions or vehicle interiors, comprising:
∘ providing a PVC-based layer with or without inorganic filler,
∘ forming a barrier layer directly adjacent the PVC-based layer by applying a aqueous coating composition on the PVC-based layer, the aqueous coating composition comprising polyvinyl alcohol the barrier layer comprising polyvinyl alcohol and a polyisocyanate, heating the aqueous coating composition to a temperature in the range from 170 to 210°C, preferably in the range from 180 to 210°C, so as to make the polyisocyanate react with the polyvinyl alcohol and the PVC-based layer, so as to form the barrier layer as a polyvinyl-alcohol-based barrier layer bonded by a polyisocyanate derivative to the PVC-based layer.

13. The method as claimed in claim 12, wherein the polyisocyanate is a blocked polyisocyanate having an activation temperature in the range from 120°C to 150°C.

14. The method as claimed in any one of claims 12 to 13, wherein the polyisocyanate in the aqueous coating amounts to between 6% and 50% of the weight of the polyvinyl alcohol.

15. The method as claimed in any one of claims 12 to 15, wherein the polyisocyanate has an isocyanate functionality in the range from 2 to 6, more preferably in the range from 2.5 to 6 or from 3 to 5.

## Patentansprüche

1. Oberflächenbedeckung zur Verwendung bei Abschlussarbeiten in Konstruktionen oder Fahrzeuginnenräumen, umfassend:
o eine Schicht auf PVC-Basis,
o eine Barriereschicht, welche direkt an die Schicht auf PVC-Basis angrenzt, wobei die Barriereschicht Polyvinylalkohol und ein durch Umsetzung eines Polyisocyanats mit Hydroxylgruppen des Polyvinylalkohols erhaltenes Polyisocyanatderivat umfasst, wobei das Polyisocyanatderivat die Barriereschicht an die Schicht auf PVC-Basis bindet.

2. Oberflächenbedeckung nach Anspruch 1, wobei das Polyisocyanatderivat ein Vernetzer von Polyvinylalkohol ist.

3. Oberflächenbedeckung nach Anspruch 1 oder 2, wobei die Schicht auf PVC-Basis anorganischen Füllstoff umfasst.

4. Oberflächenbedeckung nach einem der Ansprüche 1 bis 3, wobei der Polyvinylalkohol vollständig hydrolysiert ist, d. h. einen Hydrolysegrad von nicht weniger als 98 Mol-% aufweist.

5. Oberflächenbedeckung nach einem der Ansprüche 1 bis 4, wobei das Polyisocyanatderivat die folgende allgemeine Formel aufweist:
[-O-(C=O)-NH-]ₘ-R-NH-[-(C=O)-O-]ₙ
wobei n und m ganze Zahlen ≥1 sind, und R für einen aliphatischen oder aromatischen Anteil mit 4 bis 20 Kohlenstoffatomen steht.

6. Oberflächenbedeckung nach einem der Ansprüche 1 bis 4, wobei das Polyisocyanatderivat die folgende allgemeine Formel aufweist:
[-O-(C=O)-NH-]ₘ-R-NH-[-(C=O)-O-]ₙ
wobei n und m ganze Zahlen ≥1 sind, und R eine oder mehrere Urethangruppen -NH-(C=O)-O- einschließt.

7. Oberflächenbedeckung nach einem der Ansprüche 1 bis 6, wobei das Polyisocyanatderivat ein Derivat von mindestens einem von Toluoldiisocyanat, Methylendiphenyldiisocyanat, Hexamethylendiisocyanat, Isophorondiisocyanat, Naphthalindiisocyanat, p-Phenylendiisocyanat und Methylendicyclohexyldiisocyanat umfasst.

8. Oberflächenbedeckung nach einem der Ansprüche 1 bis 7, wobei der Oberflächenbedeckung mindestens eine von einer Bodenbedeckung und einer Wandbedeckung umfasst.

9. Oberflächenbedeckung nach einem der Ansprüche 1 bis 8, wobei die Schicht auf PVC-Basis recyceltes PVC umfasst, wobei der Gehalt an recyceltem PVC vorzugsweise mindestens 20 Gew.-%, bevorzugter mindestens 25 Gew.-%, noch bevorzugter mindestens 30 Gew.-% des gesamten PVC-Gehalts beträgt.

10. Oberflächenbedeckung nach einem der Ansprüche 1 bis 9, wobei die Schicht auf PVC-Basis eine Funktionalisierung mit Hydroxylgruppen umfasst.

11. Oberflächenbedeckung nach einem der Ansprüche 1 bis 10, wobei das Polyisocyanatderivat durch Umsetzung eines Polyisocyanats, das eine Isocyanatfunktionalität im Bereich von 2,5 bis 6, bevorzugter im Bereich von 3 bis 5 aufweist, mit Hydroxylgruppen des Polyvinylalkohols erhalten wird.

12. Verfahren zum Herstellen einer Oberflächenbedeckung zur Verwendung bei Abschlussarbeiten in Konstruktionen oder Fahrzeuginnenräumen, umfassend:
o Bereitstellen einer Schicht auf PVC-Basis mit oder ohne anorganischem Füllstoff,
o Bilden einer Barriereschicht direkt angrenzend an die Schicht auf PVC-Basis durch Aufbringen einer wässrigen Beschichtungszusammensetzung auf die Schicht auf PVC-Basis, wobei die wässrige Beschichtungszusammensetzung Polyvinylalkohol umfasst, wobei die Barriereschicht Polyvinylalkohol und ein Polyisocyanat umfasst, Erwärmen der wässrigen Beschichtungszusammensetzung auf eine Temperatur im Bereich von 170 bis 210 °C, vorzugsweise im Bereich von 180 bis 210 °C, um das Polyisocyanat zur Umsetzung mit dem Polyvinylalkohol und der Schicht auf PVC-Basis zu bringen, so dass die Barriereschicht als eine Barriereschicht auf Polyvinylalkohol-Basis gebildet wird, die durch ein Polyisocyanatderivat an die Schicht auf PVC-Basis gebunden ist.

13. Verfahren nach Anspruch 12, wobei das Polyisocyanat ein blockiertes Polyisocyanat mit einer Aktivierungstemperatur im Bereich von 120 °C bis 150 °C ist.

14. Verfahren nach einem der Ansprüche 12 bis 13, wobei das Polyisocyanat in der wässrigen Beschichtung zwischen 6 % und 50 % des Gewichts des Polyvinylalkohols beträgt.

15. Verfahren nach einem der Ansprüche 12 bis 15, wobei das Polyisocyanat eine Isocyanatfunktionalität im Bereich von 2 bis 6, bevorzugter im Bereich von 2,5 bis 6 oder von 3 bis 5 aufweist.

## Revendications

1. Revêtement de surface, destiné à être utilisé dans des travaux de finition dans des constructions ou des intérieurs de véhicules, comprenant :
∘ une couche à base de PVC,
∘ une couche barrière directement adjacente à la couche à base de PVC, la couche barrière comprenant un poly(alcool vinylique) et un dérivé de polyisocyanate obtenu par réaction d'un polyisocyanate avec des groupes hydroxyle du poly(alcool vinylique), le dérivé de polyisocyanate liant la couche barrière à la couche à base de PVC.

2. Revêtement de surface selon la revendication 1, dans lequel le dérivé de polyisocyanate est un agent de réticulation de poly(alcool vinylique).

3. Revêtement de surface selon la revendication 1 ou 2, dans lequel la couche à base de PVC comprend une charge inorganique.

4. Revêtement de surface selon l'une quelconque des revendications 1 à 3, dans lequel le poly(alcool vinylique) est complètement hydrolysé, c'est-à-dire qu'il a un degré d'hydrolyse non inférieur à 98 % en moles.

5. Revêtement de surface selon l'une quelconque des revendications 1 à 4, dans lequel le dérivé de polyisocyanate a la formule générale
[-O-(C=O)-NH-]ₘ-R-NH-[-(C=O)-O-]ₙ
où n et m sont des entiers ≥ 1 et où R représente un groupement aliphatique ou aromatique ayant 4 à 20 atomes de carbone.

6. Revêtement de surface selon l'une quelconque des revendications 1 à 4, dans lequel le dérivé de polyisocyanate a la formule générale
[-O-(C=O)-NH-]ₘ-R-NH-[-(C=O)-O-]ₙ
où n et m sont des entiers ≥ 1 et où R comprend un ou plusieurs groupes uréthane -NH-(C=O)-O-.

7. Revêtement de surface selon l'une quelconque des revendications 1 à 6, dans lequel le dérivé de polyisocyanate comprend un dérivé d'au moins un parmi : diisocyanate de toluène, diisocyanate de diphénylméthylène, diisocyanate d'hexaméthylène, diisocyanate d'isophorone, diisocyanate de naphtalène, diisocyanate de p-phénylène et diisocyanate de dicyclohexylméthylène.

8. Revêtement de surface selon l'une quelconque des revendications 1 à 7, dans lequel le revêtement de surface comprend au moins un parmi un revêtement de sol et un revêtement de mur.

9. Revêtement de surface selon l'une quelconque des revendications 1 à 8, dans lequel la couche à base de PVC comprend du PVC recyclé, la teneur en PVC recyclé s'élevant de préférence à au moins 20 %, plus préférablement à au moins 25 %, encore plus préférablement à au moins 30 % en poids de la teneur totale en PVC.

10. Revêtement de surface selon l'une quelconque des revendications 1 à 9, dans lequel la couche à base de PVC comprend une fonctionnalisation par des groupes hydroxyle.

11. Revêtement de surface selon l'une quelconque des revendications 1 à 10, dans lequel le dérivé de polyisocyanate est obtenu par réaction d'un polyisocyanate ayant une fonctionnalité d'isocyanate comprise entre 2,5 et 6, plus préférablement entre 3 et 5, avec des groupes hydroxyle du poly(alcool vinylique).

12. Procédé de production d'un revêtement de surface, destiné à être utilisé dans des travaux de finition dans des constructions ou des intérieurs de véhicules, comprenant :
∘ la fourniture d'une couche à base de PVC avec ou sans charge inorganique,
∘ la formation d'une couche barrière directement adjacente à la couche à base de PVC par application d'une composition de revêtement aqueuse sur la couche à base de PVC, la composition de revêtement aqueuse comprenant un poly(alcool vinylique), la couche barrière comprenant un poly(alcool vinylique) et un polyisocyanate, en chauffant la composition de revêtement aqueuse jusqu'à une température comprise entre 170 et 210 °C, de préférence entre 180 et 210 °C, de manière à faire réagir le polyisocyanate avec le poly(alcool vinylique) et la couche à base de PVC, de manière à former la couche barrière sous la forme d'une couche barrière à base de poly(alcool vinylique) liée par un dérivé de polyisocyanate à la couche à base de PVC.

13. Procédé selon la revendication 12, dans lequel le polyisocyanate est un polyisocyanate bloqué ayant une température d'activation comprise entre 120 °C et 150 °C.

14. Procédé selon l'une quelconque des revendications 12 à 13, dans lequel le polyisocyanate dans le revêtement aqueux représente entre 6 % et 50 % du poids du poly(alcool vinylique).

15. Procédé selon l'une quelconque des revendications 12 à 15, dans lequel le polyisocyanate a une fonctionnalité d'isocyanate comprise entre 2 et 6, plus préférablement entre 2,5 et 6 ou entre 3 et 5.
